# FASCICULE DE BREVET EUROPEEN

(11) **EP 1 042 240 B1**
(45) Date de publication et mention de la délivrance du brevet: **16.02.2005**
(21) Numéro de dépôt: 99949080.8
(22) Date de dépôt: 20.10.1999
(51) Int. Cl.: C03B 23/035, C03B 23/03

(54) **PROCEDE ET DISPOSITIF POUR LE BOMBAGE DE FEUILLES DE VERRE**
VERFAHREN UND VORRICHTUNG ZUM BIEGEN VON GLASPLATTEN
METHOD AND DEVICE FOR BENDING GLASS SHEETS

(30) Priorité: 21.10.1998 DE 19848373
(43) Date de publication de la demande: 11.10.2000
(73) Titulaire: SAINT-GOBAIN GLASS FRANCE, 92400 Courbevoie (FR)
(72) Inventeur: DIEDEREN, Werner, D-52134 Herzogenrath (DE); OLLFISCH, Karl-Josef, NL-6462 SW Kerkrade (NL); HEINING, Klaus-Peter, D-52066 Aachen (DE); DAHLHOFF, Knut, D-52064 Aachen (DE); KORSTEN, Wilfried, D-52525 Heinsberg (DE); RADERMACHER, Herbert, B-4730 Raeren (BE)
(74) Mandataire: Le Cam, Stéphane Georges Elie
(86) Numéro de dépôt international: PCT/FR1999/002549
(87) Numéro de publication internationale: WO 2000/023388

(56) Documents cités:
- EP-A- 0 706 978

## Description

L'invention se rapporte à un procédé pour le bombage de feuille de verre avec un moule de cintrage surfacique, sur lequel les feuilles de verre sont pressées à l'aide d'une chute de pression produite par l'aspiration de l'air hors de l'espace compris entre la face de moulage et la face de la feuille de verre opposée à celle-ci, la chute de pression étant maximale au bord de la feuille de verre et diminuant en direction du milieu de celle-ci, du fait que l'on introduit de l'air dans la région de la face de moulage par des ouvertures d'entrée d'air, ainsi qu'à un dispositif convenant en particulier pour la mise en oeuvre d'un tel procédé.

Par le document EP 0 241 355 B1, on connaît un dispositif pertinent, dans lequel une jupe entoure le bord extérieur du moule de cintrage avec une fente annulaire périphérique. A travers cette fente annulaire, il est possible d'aspirer l'air se trouvant dans l'espace compris entre la feuille de verre et la face du moule de cintrage. La différence de pression qui en résulte par rapport à l'atmosphère agissant sur la face libre de la feuille de verre presse celle-ci contre la face de moulage. Ensuite, on applique contre la face libre de la feuille de verre un anneau de pressage, qui donne au bord de celle-ci le contour final désiré.

Des contacts directs entre des faces de moulage métalliques et des surfaces de feuilles de verre pressées contre celles-ci sont, de façon connue, empêchés au moyen de couches intermédiaires de tissu résistant à la chaleur (voir EP-A1-0 767 146). En présence de hautes pressions d'application et/ou de fortes différences de pression d'air, il n'est cependant pas possible d'éviter totalement des traces visibles du tissu dans la surface de la feuille de verre (qui est malléable à la température de cintrage).

Dans une variante du dispositif connu, on insuffle dès lors de l'air chaud sous pression entre la face de moulage et la surface de la feuille de verre, par des canaux régulièrement répartis sur la face du moule de cintrage. Ainsi est censé se former un coussin d'air, sur lequel la feuille de verre flotte. On peut aussi, avec ce moule, cintrer des feuilles de verre, dont la zone centrale est émaillée, respectivement est pourvue d'une sérigraphie, et/ou obtenir une qualité optique particulièrement bonne, sans traces de tissu.

Le brevet US-5.669.952 divulgue un procédé et un dispositif pour le cintrage particulièrement profond des feuilles de verre, dans lequel un moule de cintrage supérieur à surface entièrement convexe coopère avec un anneau de cintrage inférieur. La feuille de verre déposée sur l'anneau, déjà préformée par la force de gravité, est soumise à un coussin d'air sous pression par des canaux de sortie dans la région centrale de la face de moulage, après avoir été amenée à proximité du moule de cintrage supérieur. Ce coussin d'air est ici utilisé comme un poinçon d'emboutissage profond, car il est censé approfondir encore davantage le cintrage de la feuille de verre sans contact de surface avec la face de moulage. Dans une variante de réalisation, le moule de cintrage supérieur présente plusieurs chambres compartimentées. On peut ainsi créer différents niveaux de pression sur le tracé de la face de moulage. Dans une autre variante de réalisation, il est prévu des ouvertures d'échappement dans la région périphérique de la face du moule de cintrage. Elles débouchent dans des chambres libres de pression (en communication avec l'atmosphère), à l'intérieur du moule de cintrage supérieur. De cette manière, l'air insufflé peut à nouveau s'échapper.

On connaît également des moules de cintrage comportant plusieurs chambres sous dépression (US 4.877.437). D'une manière générique, ceux-ci font agir une dépression sur la totalité de la face de la feuille de verre appliquée sur le moule de cintrage. La pression peut encore être abaissée localement pour des rayons particulièrement courts de la face du moule de cintrage, afin d'assurer là également une bonne application de la face de la feuille de verre sur la face de moulage et exclure des renflements. Avec ces moules de cintrage connus agissant purement sous vide, il n'est également pas possible d'éliminer les empreintes de tissu, lorsqu'il est prévu plusieurs niveaux de dépression différents. Même avec un moule qui ne présente des ouvertures d'aspiration que dans la région du bord, le contact sous pression de la feuille de verre avec la face de moulage ne peut pas être évité dans la région moyenne. En fait, plus la distance entre la feuille de verre et le moule est faible, plus l'air encore présent circule rapidement et plus la différence de pression par rapport à l'atmosphère est grande dans la région concernée.

Par le document EP 0 182 638 B1, on connaît enfin une plaque de transport plane pour des feuilles de verre, dont la face de travail comporte aussi bien des ouvertures d'aspiration pour soulever et maintenir le poids des feuilles de verre par dépression que des ouvertures d'entrée d'air pour produire un coussin d'air servant d'élément d'écartement entre les feuilles de verre et la face de travail. Avec cette disposition également, dans laquelle les ouvertures d'aspiration et d'entrée d'air sont uniformément mélangées sur la totalité de la face, on est censé empêcher une dégradation des surfaces sensibles des feuilles de verre en évitant tout contact mécanique.

L'invention a pour objet d'optimiser davantage un procédé pour le cintrage des feuilles de verre, dans lequel on produit un niveau de pression, variable du bord en direction du centre, entre la face de moulage et la feuille de verre, dans l'optique d'éviter des traces de pressage, ainsi que de proposer un dispositif, qui est approprié en particulier pour la mise en oeuvre de ce procédé.

Conformément à l'invention, cet objectif est atteint par les caractéristiques de la revendication 1, en ce qui concerne le procédé. Les caractéristiques de la revendication 6 indiquent un dispositif correspondant. Les caractéristiques des revendications secondaires respectivement associées aux revendications indépendantes indiquent des variantes avantageuses de ces objets.

De préférence, on fournit de l'air chaud, précisément dans la mesure où il règne, dans la région intéressée, une pression aussi peu réduite que possible par rapport au niveau de pression agissant au-delà de la feuille de verre - donc par rapport à la pression atmosphérique ou à une pression de maintien par exemple. Pour éviter les empreintes de tissu, il ne suffit absolument pas de mettre les chambres d'entrée d'air, respectivement des parties de la face de moulage, en communication uniquement avec l'atmosphère, comme cela est connu à un autre égard par l'état de la technique examiné. Pour atténuer le vide, il faut une certaine introduction positive d'air sous une surpression limitée, respectivement réglable. Par ailleurs, un contact de la feuille de verre échauffée à la température de cintrage avec de l'air atmosphérique insuffisamment échauffé pourrait influencer négativement le résultat du cintrage par suite d'un refroidissement indésirable.

En limitant la pression injectée entre la face de la feuille de verre et la face de moulage et en aspirant l'air chaud introduit encore à l'intérieur de la région de la face de moulage recouverte par la feuille de verre, on évite toute formation de renflement, qui ne peut pas être totalement exclue dans l'état de la technique. Naturellement, la commande des rapports de pression requiert le plus grand soin. Par la délivrance contrôlée d'air, prévue suivant l'invention, de préférence vers le centre de la feuille de verre, les efforts de contact entre le verre et le moule, respectivement le tissu, dans la région centrale sont minimisés de façon reproductible.

D'une façon particulièrement préférée, la zone d'introduction d'air se trouve dans la région centrale de la face de moulage et de la feuille de verre correspondant, et l'air introduit est à nouveau évacué autour de cette région. Il s'est avéré particulièrement efficace à cet égard de subdiviser en trois zones le niveau de pression régnant ici dans l'espace compris entre la face de moulage et la feuille de verre. La plus extérieure de celles-ci, qui s'étend le long du bord du moule de cintrage, est comme antérieurement soumise à un vide poussé, afin de fixer la feuille de verre sur la face de moulage. La zone moyenne est soumise à une pression moins fortement réduite, afin d'apporter d'une part également une certaine contribution au maintien de la feuille de verre, et d'autre part et principalement cependant d'évacuer à nouveau suivant un chemin court l'air introduit dans la zone intérieure ou centrale.

Si la face de moulage du moule de cintrage comporte elle-même, en plus des ouvertures d'entrée d'air, des ouvertures d'aspiration afin de produire la chute de pression réglable, la jupe de l'état de la technique pertinent peut disparaître et le moule de cintrage peut dès lors être réalisé de façon sensiblement plus compacte qu'auparavant. En même temps, on assure ainsi qu'après la pose du moule de cintrage annulaire inférieur sur le bord de la feuille de verre, aucun coussin d'air ne soit bloqué entre la face de moulage et la feuille de verre. Le renflement de la feuille de verre par rapport au moule de cintrage, précisément envisagé dans l'objet du brevet US-5.669.952, est ici totalement évité.

Il convient de remarquer que l'utilisation du procédé décrit ici ne dépend pas de la disposition spatiale du moule de cintrage surfacique à l'intérieur du dispositif de cintrage, même si l'invention est exposée ici en se référant à un moule de cintrage supérieur. Il est applicable partout, où il faut éviter des empreintes de tissu d'un moule de cintrage surfacique sur les feuille de verres.

Dans une forme de réalisation préférée du moule de cintrage, les ouvertures d'entrée d'air débouchent dans la région moyenne ou centrale de la face du moule de cintrage, tandis que les ouvertures d'aspiration sont disposées le long du bord extérieur de la face du moule de cintrage. Certes, on doit, comme auparavant, tenir compte du fait qu'il apparait des empreintes de tissu au bord de la surface de la feuille de verre, en raison du contact inévitable en cet endroit, au plus tard lors du pressage avec l'anneau de cintrage. La région moyenne de la surface de la feuille de verre peut cependant être maintenue entièrement libre de traces. Cela est particulièrement important pour l'emploi de feuilles de verre dans les véhicules, où les défauts optiques doivent être minimisés dans la région centrale de vision principale des feuilles de verre, tandis que des exigences très sévères sont imposées pour la précision dimensionnelle dans la région du bord.

Dans une variante particulièrement avantageuse, on subdivise la face du moule de cintrage en au moins trois zones, a savoir une zone centrale avec des ouvertures d'entrée d'air, la zone de bord extérieure avec des ouvertures d'aspiration pour un vide relativement poussé et une zone de type annulaire s'étendant entre elles, avec des ouvertures d'aspiration pour un vide réduit. Dans ce cas, la force de maintien nécessaire pour la feuille de verre est en premier lieu fournie par la zone extérieure à haut vide, tandis que la zone à dépression moyenne sert principalement à l'évacuation, suivant un chemin court, de l'air introduit dans la région centrale.

Bien entendu, l'emploi de ce moule de cintrage requiert, pour chaque type de feuille de verre à cintrer, une concordance extrêmement précise des paramètres du procédé et du dispositif, tels que :
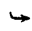 les rapports de surface entre les zones de dépression et d'entrée d'air,
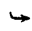 les dimensions et la répartition des canaux pour la dépression et la surpression,
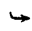 les niveaux de pression requis et éventuellement leur évolution au cours du temps,
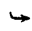 la température du moule de cintrage et de l'air à insuffler.

Il n'est pas possible de donner des valeurs de réglage génériques, valables pour tous les types de feuilles de verre, de ces paramètres. Elles peuvent cependant être déterminées individuellement par des essais moyennant un coût modéré.

Au préalable, on peut déterminer pour chaque modèle de feuille de verre une division optimisée de la face du moule de cintrage en zones respectives, par une simulation appropriée par les éléments finis. Lorsque la feuille de verre encore plane chauffée à la température de cintrage, vient pour la première fois en contact avec le moule de cintrage, par exemple par soulèvement avec un courant d'air chaud insufflé, on ne peut pas éviter un contact initial entre la feuille de verre et le moule également dans la zone centrale. Les efforts développés sont de toutes façons trop faibles - par comparaison avec les efforts dus à la différence de pression agissant lors de l'application d'une dépression - pour donner lieu à des empreintes de tissu gênantes. Ensuite, dans la simulation comme dans la réalité, la feuille de verre s'applique vers son bord essentiellement à plat sur la face de moulage sphérique, des renflements se formant cependant en des endroits déterminés, dans lesquels la feuille de verre ne s'applique pas sur le moule. Ces renflements sont reproductibles avec une précision suffisante avec chaque feuille de verre du même type de modèle. Ils doivent être amenés à s'appliquer sur la face de moulage par une différence de pression accrue. Par conséquent, la division de la face de moulage en des zones à dépression doit être déterminée suivant cette simulation, avec une précision telle que l'on obtienne avec le moule réel une application uniforme de la feuille de verre sur toute la face. Cela signifie qu'il ne doit apparaître aucun renflement lors du contact des feuilles de verre avec le moule de cintrage, ni dans la région centrale de celles-ci ni dans leurs zones de bord.

Il en résulte que l'on fabrique, avec le procédé exposé ici, des feuilles de verre dont la région de vision principale ne comporte pratiquement aucune empreinte de tissu, et qui sont cependant absolument équivalents aux feuilles de verre produites avec les moules de cintrage sous vide conventionnels, lors de la mesure de la distorsion optique par les procédés usuels.

D'autres détails et avantages du procédé ainsi que du dispositif utilisable pour sa mise en oeuvre découleront de l'illustration d'un exemple de réalisation et de sa description détaillée présentée ci-dessous.

Dans les dessins constituant une représentation simplifiée :
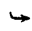 **la figure 1** montre une vue en coupe schématique d'un moule de cintrage pour des feuilles de verre, équipé de chambres de dépression et de surpression et des canaux correspondants débouchant dans la face de moulage,
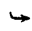 **la figure 2** est une vue de la face de moulage destinée à illustrer la division de celle-ci, spécifique du modèle, en plusieurs zones pourvues d'ouvertures d'aspiration et d'entrée d'air.

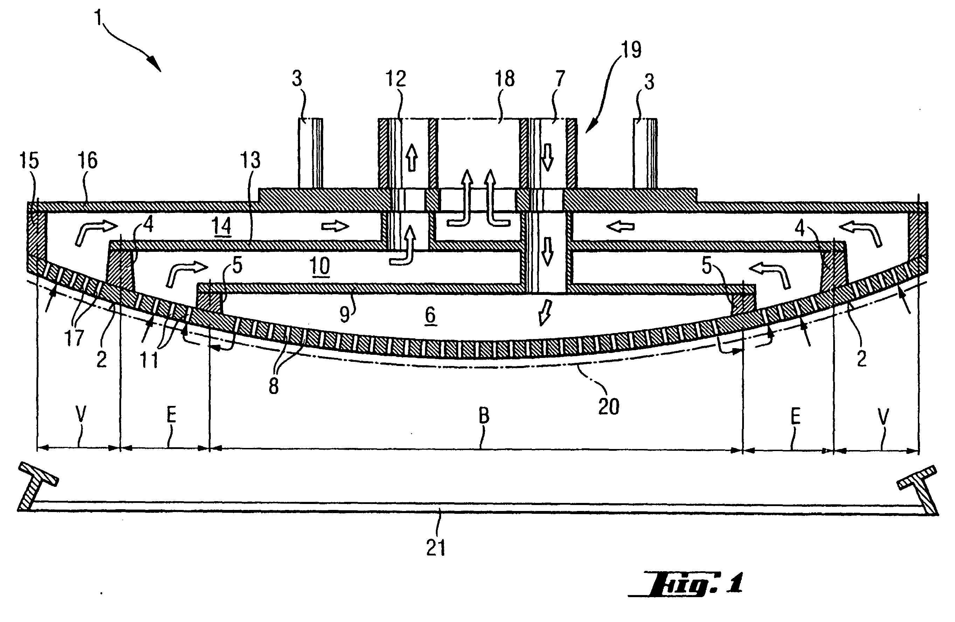

La figure 1 montre une coupe transversale schématique à travers un moule de cintrage 1 avec une face de moulage 2 à courbure sphérique. Le moule de cintrage 1, sensiblement en forme de caisson, est fixé par des supports 3 à une station de cintrage de type conventionnel, non représentée. De façon connue en soi, l'espace intérieur du moule de cintrage est subdivisé en plusieurs chambres par des nervures 4, 5.

La nervure périphérique 5 circonscrit une région moyenne ou centrale continue B de la face de moulage 2. Elle détermine ainsi à l'intérieur du moule de cintrage 1 le contour d'une chambre d'entrée d'air 6. Celle-ci peut être alimentée de l'extérieur, par un canal d'entrée d'air 7, en air qui peut ensuite s'échapper dans l'atmosphère par une multitude d'ouvertures d'entrée d'air 8, qui sortent de la chambre d'entrée d'air 6 dans la région B de la face de moulage 2.

La nervure 5 ainsi qu'un couvercle 9 qui lui est assemblé, dans lequel débouche le canal d'entrée d'air 7, séparent la chambre d'entrée d'air 6 dans l'espace intérieur du moule de cintrage 1, de façon étanche à la pression par rapport à une chambre d'échappement d'air 10 qui, projetée sur la face de moulage 2, entoure à la façon d'un anneau la chambre d'entrée d'air 6. Son périmètre extérieur est entouré par la nervure périphérique 4. Les nervures 4 et 5, disposées l'une à côté de l'autre à une distance éventuellement variable, délimitent, en projection sur la face de moulage 2, une région annulaire d'échappement d'air E. Une multitude d'ouvertures d'aspiration 11, qui débouchent dans cette région E, relient la chambre d'échappement d'air 10 à l'atmosphère. L'air entrant par les ouvertures d'aspiration 11 peut être aspiré hors de la chambre d'échappement d'air 10 par un canal d'échappement d'air 12.

Par la nervure 4 ainsi que par un couvercle 13 assemblé à celle-ci, dans lequel débouche le canal d'échappement d'air 12, la chambre d'échappement d'air 10 dans l'espace intérieur du moule de cintrage 1 est à nouveau séparée de façon étanche à la pression par rapport à une chambre sous vide 14. Celle-ci est à son tour obturée vers l'extérieur par une nervure périmétrale de bord 15 ainsi que par un couvercle extérieur 16 du moule de cintrage 1. La nervure 4 et la nervure de bord 15 délimitent entre elles à nouveau une zone extérieure annulaire qui, en projection sur la face de moulage 2, forme une région extérieure V. Sur celle-ci également sont à nouveau réparties une pluralité d'ouvertures d'aspiration 17, qui relient la chambre sous vide 14 avec l'atmosphère. L'air pénétrant dans la chambre sous vide 14 par les ouvertures d'aspiration 17 peut être aspiré par un canal à vide 18.

Le canal d'entrée d'air 7 traverse le plan du couvercle 13 et du couvercle extérieur 16. Le canal d'échappement d'air 12 traverse uniquement le plan du couvercle extérieur 16. Les traversées respectives sont bien entendu étanches à la pression. Les trois canaux 7, 12 et 18 sont rassemblés en un arrangement parallèle dans une tour de raccordement commune 19, qui sort du couvercle extérieur 16. Pour que le moule de cintrage 1 puisse, en cas de besoin, être rapidement échangé contre un autre moule, on prévoit de préférence pour les trois canaux 7, 12 et 18 un interface de raccordement commun à l'extrémité libre de la tour de raccordement 19. Des modifications de construction du moule de cintrage 1 peuvent conduire à une autre configuration et un autre guidage des canaux.

A l'intérieur de la station de cintrage, les canaux 12 et 18 sont raccordés à des générateurs de dépression et le canal 7 à un générateur de pression. Par le canal à vide 18, il est nécessaire d'établir en un temps très court, de façon connue en soi, une grande différence de pression, pour provoquer le contact, qui en règle générale n'existe pas encore, entre le bord de la feuille de verre et la face de moulage, par un puissant courant d'air depuis l'extérieur vers la chambre sous vide 14. C'est pourquoi ce canal présente la plus grande section transversale.

La face de moulage 2 est, d'une façon connue en soi, revêtue d'un tissu résistant à la chaleur, non représenté ici. Ce dernier est perméable à l'air avec une faible résistance à l'écoulement. Une feuille de verre 20 appliquée sur la face de moulage 2 est simplement indiquée ici par un trait mixte. Finalement, on a encore indiqué de façon schématique un moule de cintrage inférieur 21 sous la forme d'un anneau de cintrage. Celui-ci a pour but, de façon connue, de presser le bord extérieur de la feuille de verre 20 sur la face de moulage. De façon connue, il peut aussi servir de support de transport pour les feuilles de verre cintrées.

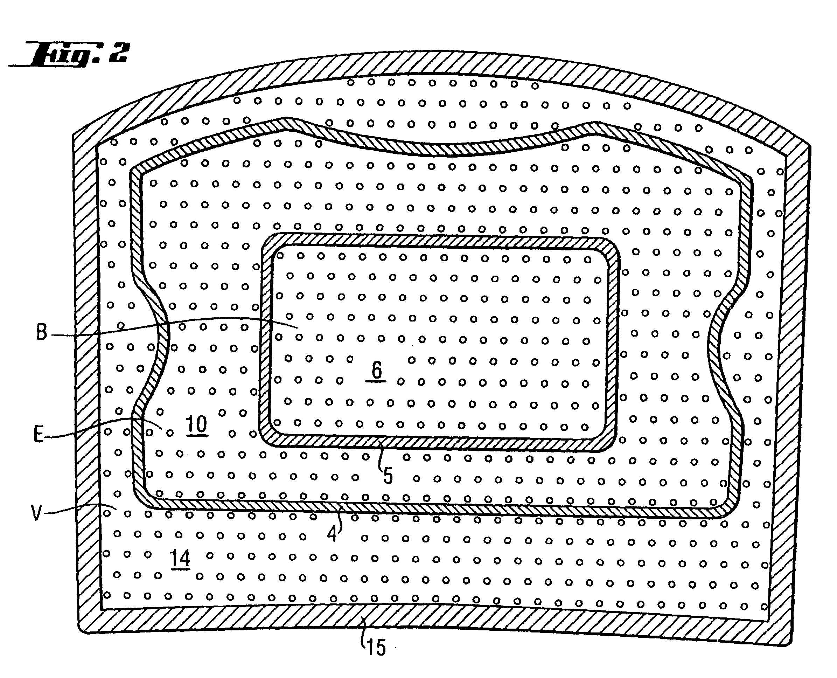

La subdivision de la face de moulage 2 en régions B, E et V dans la projection en plan, est illustrée par la figure 2. On perçoit mieux ici que la région B - entrée d'air - se trouve entièrement au centre de la face de moulage, avec une distance de tous les côtés par rapport au bord extérieur de celle-ci. On voit en outre que la région E - échappement d'air - entoure en anneau la région B et est séparée de celle-ci par la nervure 5. Enfin, la région V - vide - s'étendant entre la nervure 4 et la nervure périmétrale 15 entoure en anneau la région E. On peut également voir que la nervure 4 présente dans tous les cas un tracé particulièrement spécifié. Celui-ci est conçu en particulier suivant le comportement simulé (gauchissements, renflements) du modèle de la feuille de verre à traiter avec le moule de cintrage 1. Les ouvertures d'aspiration et d'entrée d'air sont ici réparties uniformément, pour simplifier, et sont toutes représentées avec la même grandeur. Il va de soi que l'on fera varier, dans la pratique, selon les besoins aussi bien la grandeur des ouvertures que leur répartition sur les faces des régions, en s'écartant de cette représentation.

La subdivision en régions de la face de moulage 2 peut également être projetée sur le couvercle supérieur 16. Pour le guidage des canaux 7 et 12, on peut dès lors imaginer également d'autres variantes, dans lesquelles ceux-ci - s'écartant de la représentation schématique de la figure 1 - sont raccordés directement depuis l'extérieur, sans passer d'abord à travers d'autres chambres, à la chambre 6, respectivement 10, qui leur est associée. On pourrait par exemple réunir les couvercles 9 et 13, c'est-à-dire prolonger vers le haut la nervure 5, tout comme la nervure 4, jusqu'au couvercle 13, et mener alors le canal 12 latéralement à partir de la tour de raccordement 19, à l'intérieur de ce couvercle ou à l'intérieur du couvercle extérieur, jusqu'à la région d'échappement d'air 10, le canal 12 pouvant aussi être éventuellement subdivisé en plusieurs branches, pour raccourcir les chemins d'écoulement et aspirer l'air simultanément hors de différentes portions de la région d'échappement d'air E.

Avec ce moule de cintrage 1, il est possible de faire agir sur la feuille de verre simplement indiquée dans la figure 1, uniquement le long du bord extérieur dans la région V, un vide puissant assurant l'adhérence du bord de la feuille de verre sur la face de moulage, tandis qu'en même temps, dans la région moyenne respectivement centrale B, le vide régnant au bord est au moins atténué par l'introduction d'air chaud, à un point tel que d'une part il n'apparaisse aucune empreinte de tissu dans la surface de la feuille de verre et que d'autre part cependant la feuille de verre soit encore toujours appliquée sur la face de moulage, sans formation de renflements.

Dans la zone intermédiaire ou d'échappement d'air E, on applique une dépression qui est nettement moins réduite, par rapport à la pression atmosphérique, que le vide régnant au bord, mais qui suffit avec certitude pour aspirer à nouveau complètement l'air introduit dans la région B. Il s'établit ainsi une circulation interne d'air de la région B vers la région E, comme cela est indiqué dans la figure 1, par de petites flèches toujours placées entre une ouverture d'entrée d'air 8 et une ouverture d'échappement d'air 11. Naturellement, le vide élevé appliqué au bord peut aussi aspirer l'air depuis la région centrale. Il subsiste néanmoins, dans l'espace entre la feuille de verre et la face de moulage, une montée de pression (absolue) relativement brusque, dans la zone de transition de la région V à la région E et de celle-ci vers la région B.

## Revendications

1. Procédé pour le cintrage de feuilles de verre avec un moule de cintrage surfacique (1), sur lequel les feuilles de verre sont pressées à l'aide d'une chute de pression produite par l'aspiration de l'air hors de l'espace compris entre la face de moulage (2) et la face de la feuille de verre opposée à celle-ci, la chute de pression étant maximale au bord de la feuille de verre et diminuant en direction du milieu de celle-ci, du fait que l'on introduit de l'air dans une région (B) de la face de moulage par des ouvertures d'entrée d'air (8), ***caractérisé en ce que*** l'air introduit dans la région (B) est évacué autour de cette région en soumettant à une dépression des ouvertures d'aspiration (11, 17) ménagées dans la face de moulage (2) à l'intérieur de la région recouverte par la feuille de verre respective, et **en ce que** la pression régnant entre la feuille de verre et la face de moulage (2) également dans la région de l'air introduit est réglée à une valeur égale au maximum à la pression régnant au-delà de la feuille de verre.

2. Procédé suivant la revendication 1, ***caractérisé en ce que*** l'air n'est introduit que dans une région centrale (B) de la face de moulage (2) et est évacué, par les ouvertures d'aspiration (11) , dans une région moyenne (E) entourant cette dernière mais située à distance du bord de la face de moulage (2).

3. Procédé suivant la revendication 1 ou 2, ***caractérisé en ce que*** les feuilles de verre sont maintenues sur le moule de cintrage en soumettant à un vide des ouvertures d'aspiration (17) disposées le long du bord extérieur de la face de moulage.

4. Procédé suivant la revendication 2 ou 3, ***caractérisé en ce que*** l'on utilise, pour l'aspiration de l'air introduit par les ouvertures d'entrée d'air (11) dans la région moyenne (E) de la face de moulage, une dépression présentant un niveau moins réduit que le vide produit au bord extérieur de la face de moulage (2).

5. Procédé suivant l'une quelconque des revendications précédentes, ***caractérisé en ce que*** les feuilles de verre sont pressées contre le bord extérieur du moule de cintrage surfacique supérieur au moyen d'un moule de cintrage inférieur (21) agissant sur leur bord extérieur.

6. Dispositif pour le cintrage de feuilles de verre, en particulier selon le procédé suivant la revendication 1, comprenant
- un moule de cintrage surfacique (1), sur la face de moulage (2) duquel les feuilles de verre (20) peuvent être pressées à l'aide d'une chute de pression produite par l'aspiration de l'air hors de l'espace compris entre la face de moulage et la face de la feuille de verre opposée à celle-ci, et avec des ouvertures d'entrée d'air (8) débouchant dans la face de moulage pour réduire les efforts de contact mécaniques produits par ladite chute de pression et agissant sur la face de la feuille de verre, la face de moulage (2) comprenant au moins une première région (V) pour produire la chute de pression au moyen d'ouvertures d'aspiration (17) réparties sur cette région et entourant une deuxième région (B) avec les ouvertures d'entrée d'air (8),
- des générateurs de dépression raccordés aux ouvertures d'aspiration (17) par un canal à vide (18) et une chambre sous vide (14),
- des moyens de délivrance contrôlée d'air raccordés aux ouvertures d'entrée d'air (8) par un canal d'entrée d'air (7) et une chambre d'entrée d'air (6) , afin que la pression régnant entre la feuille de verre et la face de moulage soit réglée à une valeur égale au maximum à la pression régnant au-delà de la feuille de verre.

7. Dispositif suivant la revendication précédente, ***caractérisé en ce que*** la première région (V) de la face de moulage (2) comprenant les ouvertures d'aspiration (17) est disposée le long du bord extérieur de celle-ci et la deuxième région (B) comprenant les ouvertures d'entrée d'air (8) est disposée au centre de la face de moulage (2) à distance du bord extérieur, sur tous les côtés.

8. Dispositif suivant l'une quelconque des revendications de dispositif qui précèdent, ***caractérisé en ce qu'il*** est prévu, entre la première région (V) et la deuxième région (B), une troisième région (E) avec des ouvertures d'aspiration (11) débouchant dans la face de moulage (2) et située à distance du bord extérieur, sur tous les côtés, lesdites ouvertures d'aspiration (11) débouchant dans une chambre d'échappement d'air (10) indépendante de la chambre sous vide (14).

9. Dispositif suivant la revendication précédente, ***caractérisé en ce que*** la troisième région (E) entoure de tous les côtés, à la manière d'un anneau, la deuxième région (B) dans la face de moulage (2).

10. Dispositif suivant l'une quelconque des revendications de dispositif qui précèdent, ***caractérisé en ce qu'à*** chaque région (V; B; E) de la face de moulage (2) à l'intérieur du moule de cintrage (1) est associée une chambre (6; 10; 14), qui peut être soumise au niveau de pression prévu par l'intermédiaire d'un canal (7; 12; 18) qui débouche en elle.

11. Dispositif suivant la revendication précédente, ***caractérisé en ce que*** les chambres (6; 10; 14) sont séparées l'une de l'autre par des nervures (4, 5) et des couvercles (9, 13) disposés sur le côté intérieur de la face de moulage.

12. Dispositif suivant la revendication 10 ou 11, ***caractérisé en ce que*** la totalité des canaux (7; 12; 18) associés aux chambres (6; 10; 14) sont rassemblés dans une tour de raccordement (19) commune.

13. Dispositif suivant l'une quelconque des revendications de dispositif qui précèdent, ***caractérisé en ce que*** la région (V) avec les ouvertures d'aspiration (17) proches du bord est disposée le long du bord de la face de moulage (2), avec une largeur comprise entre 40 et 200 mm, éventuellement variable le long de son tracé longitudinal.

14. Dispositif suivant l'une quelconque des revendications de dispositif qui précèdent, ***caractérisé en ce qu'il*** comporte en outre un moule annulaire (21) pour presser au moins le bord extérieur des feuilles de verre (20) sur la face de moulage (2).

## Patentansprüche

1. Verfahren zum Biegen von Glasscheiben mit einer flächigen Biegeform (1), auf welche die Glasscheiben mit Hilfe eines durch Absaugen von Luft aus dem Raum zwischen der Formfläche (2) und der dieser zugewandten Glasscheibenfläche erzeugten Druckgefälles angepresst werden, wobei das Druckgefälle am Rand der Glasscheibe am größten ist und zu deren Mitte hin abnimmt, und wobei man in mindestens einem ausschließlich der Luftzufuhr dienenden begrenzten, zusammenhängenden Bereich (B) der Formfläche über darin ausmündende Belüftungsöffnungen (8) Luft zuführt, **dadurch gekennzeichnet, dass** die Luft durch Beaufschlagen von in die Formfläche (2) eingebrachten Absaugöffnungen (11, 17) mit Unterdruck innerhalb des von der jeweiligen Glasscheibe überdeckten Bereichs (B) abgeführt wird und dass der zwischen der Glasscheibe und der Formfläche (2) herrschende Druck auch im Bereich der zugeführten Luft höchstens gleich groß wie der Druck jenseits der Glasscheibe eingestellt wird.

2. Verfahren nach Anspruch 1, **dadurch gekennzeichnet, dass** die Luft nur in einem zentralen Bereich (B) der Formfläche (2) zugeführt und in einem diesen umgebenden, jedoch vom Rand der Formfläche (2) beabstandeten mittleren Bereich (E) über die Absaugöffnungen (11) wieder abgeführt wird.

3. Verfahren nach Anspruch 1 oder 2, **dadurch gekennzeichnet, dass** die Glasscheiben durch Beaufschlagen von entlang dem äußeren Rand der Formfläche (2) angeordneten Absaugöffnungen (17) mit Vakuum an der Formfläche (2) festgelegt werden.

4. Verfahren nach Anspruch 2 oder 3, **dadurch gekennzeichnet, dass** zum Absaugen der durch die Belüftungsöffnungen (11) zugeführte Luft im mittleren Bereich (E) der Formfläche Unterdruck mit einem weniger reduzierten Niveau als das am äußeren Rand der Formfläche (2) erzeugte Vakuum verwendet wird.

5. Verfahren nach einem der vorstehenden Ansprüche, **dadurch gekennzeichnet, dass** die Glasscheiben mittels einer unteren, auf ihren äußeren Rand einwirkenden Biegeform (21) gegen den äußeren Rand der flächigen oberen Biegeform gepresst werden.

6. Vorrichtung zum Biegen von Glasscheiben insbesondere nach dem Verfahren gemäß Anspruch 1, umfassend:
- eine flächige Biegeform (1), auf deren Formfläche (2) die Glasscheiben (20) mit Hilfe eines durch Absaugen von Luft aus dem Raum zwischen der Formfläche und der dieser zugewandten Glasscheibenfläche erzeugten Druckgefälles anpressbar sind, und mit in der Formfläche ausmündenden Belüftungsöffnungen (8) zum Reduzieren von durch das besagte Druckgefälle erzeugten, auf die Glasscheibenfläche wirkenden mechanischen Kontraktkräften, wobei die Formfläche (2) mindestens einen ersten Bereich (V) zum Erzeugen des Druckgefälles mittels über diesen Bereich verteilter Absaugöffnungen (17) sowie daneben einen zweiten Bereich (B) mit den Belüftungsöffnungen (8) umfasst.
- durch einen Vakuumkanal (18) mit den Absaugöffnungen (17) verbundene Unterdruckerzeuger und eine Vakuumkammer (14),
- Mittel zur kontrollierten Lieferung von Luft, die über einen Lufteintrittskanal (7) und eine Lufteintrittskammer (6) mit den Belüftungsöffnungen (8) verbunden sind, damit der zwischen der Glasscheibe und der Formfläche herrschende Druck höchstens gleich groß wie der Druck jenseits der Glasscheibe eingestellt wird.

7. Vorrichtung nach dem vorstehenden Anspruch, **dadurch gekennzeichnet, dass** der erste Bereich (V) der Formfläche (2), der die Absaugöffnungen (17) umfasst, entlang deren äußeren Rand und der die Belüftungsöffnungen (8) umfassende zweite Bereich (B) im Zentrum der Formfläche (2) mit allseitigem Abstand vom äußeren Rand angeordnet ist.

8. Vorrichtung nach einem der vorstehenden Vorrichtungsansprüche, **dadurch gekennzeichnet, dass** zwischen dem ersten Bereich (V) und dem zweiten Bereich (B) ein dritter Bereich (E) mit in die Formfläche (2) ausmündenden Absaugöffnungen (11) und allseitigem Abstand vom äußeren Rand vorgesehen ist, wobei besagte Absaugöffnungen (11) in eine von der Vakuumkammer (14) unabhängige Luftauslasskammer (10) münden.

9. Vorrichtung nach dem vorstehenden Anspruch, **dadurch gekennzeichnet, dass** der dritte Bereich (E) den zweiten Bereich (B) in der Formfläche (2) ringförmig allseitig umgibt.

10. Vorrichtung nach einem der vorstehenden Vorrichtungsansprüche, **dadurch gekennzeichnet, dass** jeder Bereich (V; B; E) der Formfläche (2) innerhalb der Biegeform (1) einer Kammer (6; 10; 14) zugeordnet ist, welche über einen in sie ausmündenden Kanal (7; 12; 18) mit dem vorgesehenen Druckniveau beaufschlagbar ist.

11. Vorrichtung nach dem vorstehenden Anspruch, **dadurch gekennzeichnet, dass** die Kammern (6; 10; 14) voneinander durch auf der Innenseite der Formfläche angeordnete Stege (4, 5) und Deckel (9, 13) getrennt sind.

12. Vorrichtung nach Anspruch 10 oder 11, **dadurch gekennzeichnet, dass** die Gesamtheit der den Kammern (6; 10; 14) zugeordneten Kanäle (7; 12; 18) in einem gemeinsamen Anschlussturm (19) zusammengefasst ist.

13. Vorrichtung nach einem der vorstehenden Vorrichtungsansprüche, **dadurch gekennzeichnet, dass** der Bereich (V) mit den randseitigen Absaugöffnungen (17) mit einer zwischen 40 und 200 mm liegenden, ggf. über den Längsverlauf veränderlichen Breite entlang dem Rand der Formfläche (2) angeordnet ist.

14. Vorrichtung nach einem der vorstehenden Vorrichtungsansprüche, **dadurch gekennzeichnet, dass** sie außerdem eine Ringform (21) zum Andrücken zumindest des äußeren Randes der Glasscheiben (20) an die Formfläche (2) umfasst.

## Claims

1. Method for curving sheets of glass with a surface curving mould (1), on which the sheets of glass are pressed by means of a pressure drop produced by sucking air out of the space lying between the moulding face (2) and the face of the sheet of glass opposite thereto, the pressure drop being at a maximum at the edge of the sheet of glass and reducing in the direction of the middle thereof, because air is introduced into a region (B) of the moulding face through air inlet openings (8), **characterised in that** the air introduced into the region (B) is discharged around this region by subjecting to a negative pressure suction openings (11, 17) provided in the moulding face (2) inside the region covered by the respective sheet of glass, and **in that** the pressure prevailing between the sheet of glass and the moulding face (2) also in the region of the introduced air is adjusted to a value equal at a maximum to the pressure prevailing beyond the sheet of glass.

2. Method according to Claim 1, **characterised in that** the air is introduced only into a central region (B) of the moulding face (2) and is. discharged, through the suction openings (11), in a middle region (E) surrounding the latter but situated at a distance from the edge of the moulding face (2).

3. Method according to Claim 1 or 2, **characterised in that** the sheets of glass are held on the curving mould by subjecting suction openings (17) disposed along the external edge of the moulding face to a vacuum.

4. Method according to Claim 2 or 3, **characterised in that** use is made, for the suction of the air introduced through the air inlet openings (11) in the middle region (E) of the moulding face, of a negative pressure having a less low level than the vacuum produced at the external edge of the moulding face (2).

5. Method according to any one of the preceding claims, **characterised in that** the sheets of glass are pressed against the external edge of the top surface curving mould by means of a bottom curving mould (21) acting on their external edge.

6. Device for curving sheets of glass, in particular according to the method according to Claim 1, comprising
- a surface curving mould (1), on the moulding face (2) of which the sheets of glass (20) can be pressed by means of a pressure drop produced by the suction of air out of the space lying between the moulding face and the face of the sheet of glass opposite thereto, and with air inlet openings (18) opening out in the moulding face in order to reduce the mechanical contact forces produced by the said pressure drop and acting on the face of the sheet of glass, the moulding face (2) comprising at least one first region (V) for producing the pressure drop by means of suction openings (17) distributed over this region and surrounding a second region (B) with the air inlet openings (8),
- negative pressure generators connected to the suction openings (17) by a vacuum channel (18) and a chamber under vacuum (14),
- means for the controlled delivery of air connected to the air inlet openings (8) by an air inlet channel (7) and an air inlet chamber (6), so that the pressure prevailing between the sheet of glass and the moulding face is adjusted to a value equal at a maximum to the pressure prevailing beyond the sheet of glass.

7. Device according to the preceding claim, **characterised in that** the first region (V) of the moulding face (2) comprising the suction openings (17) is disposed along the external edge thereof and the second region (B) comprising the air inlet openings (8) is disposed at the centre of the moulding face (2) at a distance from the external edge, on all sides.

8. Device according to any one of the preceding device claims, **characterised in that** a third region (E) is provided, between the first region (V) and the second region (B), with suction openings (11) opening out in the moulding face (2) and situated at a distance from the external edge, on all sides, the said suction openings (11) opening out in an air exhaust chamber (10) independent of the chamber under vacuum (14).

9. Device according to the preceding claim, **characterised in that** the third region (E) surrounds on all sides, like a ring, the second region (B) in the moulding face (2).

10. Device according to any one of the preceding device claims, **characterised in that**, with each region (V; B; E) of the moulding face (2) inside the curving mould (1) there is associated a chamber (6; 10; 14) which can be subjected to the pressure level provided by means of a channel (7; 12; 18) which opens out in it.

11. Device according to the preceding claim, **characterised in that** the chambers (6; 10; 14) are separated from each other by ribs (4, 5) and covers (9, 13) disposed on the internal side of the moulding face.

12. Device according to Claim 10 or 11, **characterised in that** all the channels (7; 12; 18) associated with the chambers (6; 10; 14) are connected together in a common connecting tower (19).

13. Device according to any one of the preceding device claims, **characterised in that** the region (V) with the suction openings (17) close to the edge is disposed along the edge of the moulding face (2), with a width of between 40 and 200 mm, possibly variable along its horizontal outline.

14. Device according to any one of the preceding device claims, **characterised in that** it also comprises an annular mould (21) for pressing at least the external edge of the sheets of glass (20) on the moulding face (2).
